# EUROPEAN PATENT APPLICATION

(11) **EP 4 227 443 A1**
(43) Date of publication of application: **16.08.2023**
(21) Application number: 22779103.5
(22) Date of filing: 31.03.2022
(51) Int. Cl.: C25D 3/46, C01B 32/194

(54) **COMPOUND DISPERSANT AND PREPARATION METHOD, AND MIXED ELECTROPLATING SOLUTION AND PREPARATION METHOD**

(30) Priority: 01.04.2021 CN 202110354445
(71) Applicant: Zhejiang Chint Electrics Co., Ltd., Yueqing, Zhejiang 325603 (CN)
(72) Inventor: HU, Yiming, Yueqing, Zhejiang 325603 (CN); WANG, Chuan, Yueqing, Zhejiang 325603 (CN); LIN, Rongzhen, Yueqing, Zhejiang 325603 (CN); JI, Shen, Yueqing, Zhejiang 325603 (CN); XU, Zhengli, Yueqing, Zhejiang 325603 (CN); ZHOU, Jinyu, Yueqing, Zhejiang 325603 (CN); ZENG, Lang, Yueqing, Zhejiang 325603 (CN); SHEN, Qi, Yueqing, Zhejiang 325603 (CN); LIN, Junyu, Yueqing, Zhejiang 325603 (CN); ZHENG, Jianyong, Yueqing, Zhejiang 325603 (CN)
(74) Representative: Petraz, Gilberto Luigi
(86) International application number: PCT/CN2022/084617
(87) International publication number: WO 2022/206923

(57) **Abstract**

The present invention relates to the field of material technologies, and more particularly to a compound dispersant which is composed of distilled water, a nonionic surfactant, an anionic surfactant and a wetting agent. The nonionic surfactant is a Tween compound, the anionic surfactant is a hydrocarbyl sulfonate salt compound, and the wetting agent is an amide compound; and the compound dispersant can block or slow down agglomeration of graphene in a dispersion solution. The present invention further relates to a preparation method of the compound dispersant, which is used for preparing the compound dispersant and is simple to operate. The present invention further relates to a mixed electroplating solution containing the compound dispersant, in which the graphene is dispersed uniformly and stably. The present invention further relates to a preparation method of the mixed electroplating solution, in which graphene is distributed uniformly and stably.

## Description

### TECHNICAL FIELD

The present invention relates to the field of material technologies, and more particularly to a compound dispersant, a preparation method of the compound dispersant, a mixed electroplating solution including the compound dispersant, and a preparation method of the mixed electroplating solution.

### BACKGROUND ART

Graphene is a two-dimensional crystalline material with excellent electrical, thermal and mechanical properties, wherein single-layer graphene has the thermal conductivity as high as 5150 W(m K) and the carrier mobility up to 15000 cm²(V·S); and a metal-based graphene composite electrical contact material has superior electrical conductivity, wear resistance and thermal conductivity compared to other reinforced phase composite electrical contact materials. In addition, the graphene has good stability, without any dielectric corrosion problem after being compounded with a metal.

There is a strong π-π force between graphene layers, such that single-layer graphene dispersed in a dispersion solution is easily agglomerated to form graphite again, which seriously affects its performances. Due to special hydrophobic and oleophobic structures, it is in need of adding special surfactants and penetrants that the graphene can be stably dispersed in water or other solvents, such that the graphene can be electroplated on the metal surface to obtain the metal-based graphene composite electrical contact material.

### SUMMARY OF THE INVENTION

Objects of the present invention are to overcome the defects of the prior art and provide a compound dispersant that can block or slow down the agglomeration of graphene in a dispersion solution; provide a preparation method of the compound dispersant, which is simple to operate; also provide a mixed electroplating solution, in which graphene is dispersed uniformly and stably; and further provide a preparation method of the mixed electroplating solution, in which graphene is dispersed uniformly and stalely.

To achieve the above object, the present invention adopts the following technical solution:
A compound dispersant, being composed of distilled water, a nonionic surfactant, an anionic surfactant and a wetting agent, wherein the nonionic surfactant is a Tween compound, the anionic surfactant is a hydrocarbyl sulfonate salt compound, and the wetting agent is an amide compound.

Further, the wetting agent comprises one or more of polyvinylpyrrolidone, alkylamide, diglycolamide laurate, sodium pyrrolidone carboxylate, polyoxyethylene alkylamide and alkylolamide(s).

Further, the nonionic surfactant comprises one or more of Tween-20, Tween-40, Tween-60 and Tween-80.

Further, the anionic surfactant comprises one or more of dihexyl sodium sulfosuccinate, sodium lauryl succinate monoester sulfonate, disodium 4-dodecyl-2,4'-oxydibenzenesulfonate, lauryl sulfosuccinate monoester sodium two, disodium laureth (3) sulfosuccinate, dioctyl sulfosuccinate sodium salt and dioctyl sulfosuccinate sodium salt.

Further, a mass fraction of the nonionic surfactant in the compound dispersant is 1-10%.

Further, a mass fraction of the wetting agent in the compound dispersant is 1-10%.

Further, a mass fraction of the anionic surfactant in the compound dispersant is 1-10%.

A preparation method for a compound dispersant, comprising the following steps:
Step 1, adding an anionic surfactant and a non-ionic surfactant to distilled water at a temperature of T0, and stirring for t0, 40°C≤ T0≤60°C, 5≤t0≤15min; and
Step 2, adding a wetting agent to a mixture obtained in Step 1, supplementing with the distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

Further, the wetting agent comprises one or more of polyvinylpyrrolidone, alkylamide, diglycolamide laurate, sodium pyrrolidone carboxylate, polyoxyethylene alkylamide and alkylolamide(s).

Further, the nonionic surfactant comprises one or more of Tween-20, Tween-40, Tween-60 and Tween-80.

Further, the anionic surfactant comprises one or more of dihexyl sodium sulfosuccinate, sodium lauryl succinate monoester sulfonate, disodium 4-dodecyl-2,4'-oxydibenzenesulfonate, lauryl sulfosuccinate monoester sodium two, disodium laureth (3) sulfosuccinate, dioctyl sulfosuccinate sodium salt and dioctyl sulfosuccinate sodium salt.

A mixed electroplating solution, comprising the compound dispersant, a silver-based aqueous solution and graphene, the silver-based aqueous solution comprises KCN and silver ions.

Further, a mass-volume concentration of KCN in the silver-based aqueous solution is 90.0-200.0g/L.

Further, a mass-volume concentration of silver ions in the silver-based aqueous solution is 15.0-50.0g/L.

Further, a mass-volume concentration of graphene in the mixed electroplating solution is 1.0-20.0g/L.

Further, a barrel plating current density of the mixed electroplating solution is 0.5-0.7A/dm².

Further, a rack plating current density of the mixed electroplating solution is 0.7-1.0A/dm².

Further, a volume by volume concentration of the compound dispersant in the mixed electroplating solution is 15.0-45.0ml/L.

A preparation method of a mixed electroplating solution, comprising the following steps:
Step 1, preparing a silver-based aqueous solution, wherein in the silver-based aqueous solution, a mass-volume concentration of KCN is 90.0-200.0g/L, and a mass-volume concentration of silver ions is 15.0-50.0g/L; and
Step 2, adding the compound dispersant and graphene sequentially to the silver-based aqueous solution, and mixing under stirring to prepare the mixed electroplating solution, wherein in the mixed electroplating solution, a volume by volume concentration of the compound dispersant is 15.0-45.0ml/L, and a mass-volume concentration of the graphene is 1.0-20.0g/L.

According to the two compound dispersants of the present invention, components cooperate synergistically, and lipophilic groups in the dispersants can be adsorbed on the surfaces of graphene particles to form a coating layer which can effectively block or slow down agglomeration of graphene in the dispersion solution. Moreover, hydrophilic groups in the dispersants are bonded with OH- ions in water to ensure that graphene is dispersed uniformly and stably in the dispersion solution.

The preparation method of the compound dispersant of the present invention is simple to operate; and the prepared compound dispersant can effectively block or slow down the agglomeration of graphene in the dispersion solution.

According to the mixed electroplating solution of the present invention, the compound dispersant can effectively block or slow down the agglomeration of graphene, and ensure that the graphene is dispersed stably and uniformly in the mixed electroplating solution, thus being conducive to improving the uniformity of graphene in a silver-graphene electroplating layer of an electroplated product and better exerting the conductivity and wear resistance of the graphene.

The graphene in the mixed electroplating solution prepared by the preparation method of the mixed electroplating solution is distributed uniformly and stably.

### DETAILED DESCRIPTIONS OF THE PREFERRED EMBODIMENTS

The specific embodiments of a compound dispersant and a preparation method, a mixed electroplating solution including the compound dispersant and a preparation method of the mixed plating solution of the present invention are further described below in conjunction with examples. The compound dispersant and the preparation method, the mixed electroplating solution including the compound dispersant and the preparation method of the mixed plating solution of the present invention are not limited to the description of the following examples.

The present invention discloses a compound dispersant which is used for blocking or slowing down agglomeration of graphene in a dispersion solution and is composed of distilled water, a nonionic surfactant, an anionic surfactant and a wetting agent, wherein the nonionic surfactant is a Tween compound, the anionic surfactant is a hydrocarbyl sulfonate salt compound, and the wetting agent is an amide compound.

According to the compound dispersant of the present invention, components cooperate synergistically, and lipophilic groups in the dispersants can be adsorbed on the surfaces of graphene particles to form a coating layer which can effectively block or slow down agglomeration of graphene in the dispersion solution. Moreover, hydrophilic groups in the dispersants are bonded with OH- ions in water to ensure that graphene is dispersed uniformly and stably in the dispersion solution.

The present invention discloses a preparation method for the compound dispersant, comprising the following steps:
Step 1, adding an anionic surfactant and a non-ionic surfactant to distilled water at a temperature of T0, and stirring for t0, 5≤t0≤15min, 40°C≤ T0≤60°C; and
Step 2, adding a wetting agent to a mixture obtained in Step 1, supplementing with the distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

The preparation method of the compound dispersant of the present invention is simple to operate, and by which the compound dispersant is prepared can effectively block or slow down the agglomeration of graphene in the dispersion solution.

The present invention discloses a mixed electroplating solution, comprising the compound dispersant, a silver-based aqueous solution and graphene, the silver-based aqueous solution comprises KCN and silver ions.

According to the mixed electroplating solution of the present invention, of which the compound dispersant can effectively block or slow down the agglomeration of graphene, and ensure that the graphene is dispersed stably and uniformly in the mixed electroplating solution, thus being conducive to improving the uniformity of graphene in a silver-graphene electroplating layer of an electroplated product and better exerting the conductivity and wear resistance of the graphene.

The present invention discloses a preparation method of the mixed electroplating solution, comprising the following steps:
Step 1, preparing a silver-based aqueous solution, wherein in the silver-based aqueous solution, a mass-volume concentration of KCN is 90.0-200.0g/L, and a mass-volume concentration of silver ions is 15.0-50.0g/L; and
Step 2, adding the compound dispersant and graphene sequentially to the silver-based aqueous solution, and mixing under stirring to prepare the mixed electroplating solution, wherein in the mixed electroplating solution, a volume by volume concentration of the compound dispersant is 15.0-45.0ml/L, and a mass-volume concentration of the graphene is 1.0-20.0g/L.

The graphene in the mixed electroplating solution prepared by the preparation method of the mixed electroplating solution is distributed uniformly and stably.

The compound dispersant and the preparation method are further described below in conjunction with specific examples.

The following is an embodiment of the compound dispersant of the present invention.

The compound dispersant of the present invention is used for blocking or slowing down agglomeration of graphene in a dispersion solution (e.g., a mixed electroplating solution of the present invention) and is composed of distilled water, a nonionic surfactant, an anionic surfactant and a wetting agent, wherein the nonionic surfactant is a Tween compound, the anionic surfactant is a hydrocarbyl sulfonate salt compound, and the wetting agent is an amide compound.

The anionic surfactant includes one or more of dihexyl sodium sulfosuccinate, sodium lauryl succinate monoester sulfonate, disodium 4-dodecyl-2,4'-oxydibenzenesulfonate, lauryl sulfosuccinate monoester sodium two, disodium laureth (3) sulfosuccinate, dioctyl sulfosuccinate sodium salt and dioctyl sulfosuccinate sodium salt.

Further, a mass fraction of the anionic surfactant in the compound dispersant is 1-10%. The mass fraction of the anionic surfactant in the compound dispersant is 1%, 2%, 3%, 4%, 5%, 6%, 7%, 8%, 9% or 10%.

Further, the nonionic surfactant includes one or more of Tween-20, Tween-40, Tween-60 and Tween-80.

Further, a mass fraction of the nonionic surfactant in the composite dispersant is 1-10%. The mass fraction of the nonionic surfactant in the compound dispersant is 1%, 2%, 3%, 4%, 5%, 6%, 7%, 8%, 9% or 10%.

Further, the wetting agent includes one or more of polyvinylpyrrolidone, alkylamide, diglycolamide laurate, sodium pyrrolidone carboxylate, polyoxyethylene alkylamide and alkylolamide(s).

Further, a mass fraction of the wetting agent in the compound dispersant is 1-10%. Further, the mass fraction of the wetting agent in the compound dispersant is 1%, 2%, 3%, 4%, 5%, 6%, 7%, 8%, 9% or 10%.

The following is an embodiment of the preparation method of the compound dispersant of the present invention.

The preparation method of the compound dispersant of the present invention includes the following operation steps.

Step 1. The anionic surfactant and the non-ionic surfactant are added to the distilled water at a temperature of T0, and stirred for t0, 40°C≤ T0≤60°C, 5≤t0≤15min.

Further, T0 is 40°C, 45°C, 50°C, 55°C or 60°C.

Further, t0 is 5min, 6min, 7min, 8min, 9min, 10min, 11min, 12min, 13min, 14min, or 15min.

Step 2. The wetting agent is added to a mixture obtained in Step 1, supplemented with the distilled water and stirred for t1 to obtain the compound dispersant, 5min<t1<15min. In the compound dispersant, the mass fraction of the nonionic surfactant is 1-10%, the mass fraction of the anionic surfactant is 1-10%, the mass fraction of the wetting agent is 1-10%, and the balance is distilled water.

Further, t1 is 5min, 6min, 7min, 8min, 9min, 10min, 11min, 12min, 13min, 14min, or 15min.

Specifically, for example, when pre-preparing a compound dispersant with a mass of M kg, and the required mass of distilled water is calculated. In Step 1, 15-45% of the required mass of distilled water is taken and heated to T0, added with the anionic surfactant and the nonionic surfactant and stirred for t0. In Step 2, the wetting agent is added to the mixture obtained in Step 1, supplemented with distilled water, and stirred for t1 to obtain M kg of the compound dispersant.

### Example 1:

The compound dispersant is composed of dihexyl sodium sulfosuccinate, Tween-20, polyvinylpyrrolidone and distilled water. In the compound dispersant, a mass fraction of the dihexyl sodium sulfosuccinate is 5%, a mass fraction of the Tween-20 is 5%, a mass fraction of the polyvinylpyrrolidone is 5%, and the balance is distilled water. Of course, the compound dispersant may also contain other impurities due to raw materials and processes.

A preparation method of the compound dispersant includes the following operating steps:
Step 1, adding dihexyl sodium sulfosuccinate and Tween-20 sequentially to distilled water at a temperature of 50°C, and stirring for 10min; and
Step 2, adding polyvinylpyrrolidone to the mixture obtained in Step 1, supplementing distilled water, and stirring for 10min to prepare the compound dispersant, wherein in the compound dispersant, a mass fraction of the dihexyl sodium sulfosuccinate is 5%, a mass fraction of the Tween-20 is 5%, a mass fraction of the polyvinylpyrrolidone is 5%, and the balance is distilled water.

### Example 2:

The compound dispersant is composed of lauryl sulfosuccinate monoester sodium two, Tween-20, polyoxyethylene alkylamide and distilled water; in the compound dispersant, a mass fraction of lauryl sulfosuccinate monoester sodium two is 5%, a mass fraction of Tween-20 is 5%, a mass fraction of polyoxyethylene alkylamide is 5%, and the balance is distilled water.

A preparation method of the compound dispersant includes the following operation steps:
Step 1, adding lauryl sulfosuccinate monoester sodium two and Tween-20 sequentially to distilled water at a temperature of 50°C, and stirring for 10min; and
Step 2, adding polyoxyethylene alkylamide to the mixture obtained in Step 1, supplementing distilled water, and stirring for 10min to prepare the compound dispersant, wherein in the compound dispersant, a mass fraction of the lauryl sulfosuccinate monoester sodium two is 5%, a mass fraction of the Tween-20 is 5%, a mass fraction of the polyoxyethylene alkylamide is 5%, and the balance is distilled water.

### Example 3:

The compound dispersant is composed of sodium lauryl succinate monoester sulfonate, Tween-80, alkylamide and distilled water; and in the compound dispersant, a mass fraction of the sodium lauryl succinate monoester sulfonate is 7%, a mass fraction of the Tween-80 is 5%, a mass fraction of the alkylamide is 4%, and the balance is distilled water.

A preparation method of the compound dispersion includes the following operation steps:
Step 1, adding sodium lauryl succinate monoester sulfonate and Tween-80 sequentially to distilled water at a temperature of 50°C, and stirring for 10min; and
Step 2, adding alkylamide to the mixture obtained in Step 1, supplementing distilled water, and stirring for 10min to prepare the compound dispersant, wherein in the compound dispersant, a mass fraction of the sodium lauryl succinate monoester sulfonate is 7%, a mass fraction of the Tween-80 is 5%, a mass fraction of the alkylamide is 4%, and the balance is distilled water.

### Example 4:

The compound dispersant is composed of dihexyl sodium sulfosuccinate, Tween-60, sodium pyrrolidone carboxylate and distilled water; and in the compound dispersant, a mass fraction of the dihexyl sodium sulfosuccinate is 6%, a mass fraction of the Tween-60 is 5%, a mass fraction of the sodium pyrroidone carboxylate is 4%, the balance is distilled water.

A preparation method of the compound dispersant includes the following operation steps:
Step 1, adding dihexyl sodium sulfosuccinate and Tween-60 sequentially to distilled water at a temperature of 50°C, and stirring for 10min; and
Step 2, adding sodium pyrrolidone carboxylate to the mixture obtained in Step 1, supplementing distilled water, and stirring for 10min to prepare the compound dispersant, wherein in the compound dispersant, a mass fraction of the dihexyl sodium sulfosuccinate is 6%, a mass fraction of the Tween-60 is 5%, a mass fraction of the sodium pyrrolidone carboxylate is 4%, and the balance is distilled water.

### Example 5:

The compound dispersant is composed of sodium dodecyl dimethyl ether disulfonate, Tween-40, alkylolamide(s) and distilled water; and in the compound dispersant, a mass fraction of the sodium dodecyl dimethyl ether disulfonate is 1%, a mass fraction of the Tween-40 is 1%, a mass fraction of the alkylolamide(s) is 1%, and the balance is distilled water.

A preparation method of the compound dispersant includes the following operation steps:
Step 1, adding sodium dodecyl dimethyl ether disulfonate and Tween-40 sequentially to distilled water at a temperature of 40°C, and stirring for 5min; and
Step 2, adding alkylolamide(s) to the mixture obtained in Step 1, supplementing distilled water, and stirring for 5min to prepare the compound dispersant, wherein in the compound dispersant, a mass fraction of the sodium dodecyl dimethyl ether disulfonate is 1%, a mass fraction of the Tween-40 is 1%, a mass fraction of the alkylolamide(s) is 1%, and the balance is distilled water.

### Example 6:

The compound dispersant is composed of disodium laureth (3) sulfosuccinate, Tween-20, and diethanolamide silicate and distilled water; and in the compound dispersant, a mass fraction of the disodium laureth (3) sulfosuccinate is 10%, a mass fraction of the Tween-20 is 10%, a mass fraction of the diethanolamide silicate is 10%, and the balance is distilled water.

A preparation method of the compound dispersant includes the following operation steps:
Step 1, adding disodium laureth (3) sulfosuccinate and Tween-20 sequentially to distilled water at a temperature of 60°C, and stirring for 15min; and
Step 2, adding diethanolamide silicate to the mixture obtained in Step 1, and stirring for 15min to prepare the compound dispersant, wherein in the compound dispersant, a mass fraction of the disodium laureth (3) sulfosuccinate is 10%, a mass fraction of the Tween-20 is 10%, a mass fraction of the diethanolamide silicate is 10%, and the balance is distilled water.

### Example 7:

The compound dispersant is composed of dihexyl sodium sulfosuccinate, sodium dodecyl dimethyl ether disulfonate, Tween-20, Tween-60, polyvinylpyrrolidone, sodium pyrrolidone carboxylate and distilled water; and in the compound dispersant, a mass fraction of the dihexyl sodium sulfosuccinate is 4%, a mass fraction of the sodium dodecyl dimethyl ether disulfonate is 3%, a mass fraction of the Tween-20 is 3%, a mass fraction of the Tween-60 is 3%, a mass fraction of the polyvinylpyrrolidone is 2%, a mass fraction of the sodium pyrrolidone carboxylate is 2%, and the balance is distilled water.

A preparation method of the compound dispersant includes the following operation steps:
Step 1, adding anionic surfactants (dihexyl sodium sulfosuccinate and sodium dodecyl dimethyl ether disulfonate) and nonionic surfactants (Tween-20 and Tween-60) sequentially to distilled water at a temperature of 45°C, and stirring for 10min; and
Step 2, adding wetting agents (polyvinylpyrrolidone and sodium pyrrolidone carboxylate) to the mixture obtained in Step 1, supplementing distilled water, and stirring for 10min to prepare the compound dispersant, wherein in the compound dispersant, a mass fraction of the dihexyl sodium sulfosuccinate is 4%, a mass fraction of the sodium dodecyl dimethyl ether disulfonate is 3%, a mass fraction of the Tween-20 is 3%, a mass fraction of the Tween-60 is 3%, a mass fraction of the polyvinylpyrrolidone is 2%, a mass fraction of the sodium pyrrolidone carboxylate is 2%, and the balance is distilled water.

### Example 8:

The compound dispersant is composed of dihexyl sodium sulfosuccinate, lauryl sulfosuccinate monoester sodium two, sodium lauryl succinate monoester sulfonate, Tween-20, Tween-80, Tween-60, polyvinylpyrrolidone, polyoxyethylene alkylamide, alkylamide and distilled water; and in the compound dispersant, a mass fraction of the dihexyl sodium sulfosuccinate is 2%, a mass fraction of the lauryl sulfosuccinate monoester sodium two is 1%, a mass fraction of the sodium lauryl succinate monoester sulfonate is 2%, a mass fraction of the Tween-20 is 2%, a mass fraction of the Tween-80 is 2%, a mass fraction of the Tween-60 is 1%, a mass fraction of the polyvinylpyrrolidone is 2%, a mass fraction of the polyoxyethylene alkylamide is 2%, a mass fraction of the alkylamide is 2%, and the balance is distilled water.

A preparation method of the compound dispersant includes the following operation steps:
Step 1, adding anionic surfactants (dihexyl sodium sulfosuccinate, lauryl sulfosuccinate monoester sodium two and sodium lauryl succinate monoester sulfonate) and nonionic surfactants (Tween-20, Tween-60 and Tween-80) sequentially to distilled water at a temperature of 55°C, and stirring for 15min; and
Step 2, adding wetting agents (polyvinylpyrrolidone, polyoxyethylene alkylamide and alkylamide) to the mixture obtained in Step 1, supplementing distilled water, and stirring for 15min to prepare the compound dispersant; and in the compound dispersant, a mass fraction of the dihexyl sodium sulfosuccinate is 2%, a mass fraction of the lauryl sulfosuccinate monoester sodium two is 1%, a mass fraction of the sodium lauryl succinate monoester sulfonate is 2%, a mass fraction of the Tween-20 is 2%, a mass fraction of the Tween-80 is 2%, a mass fraction of the Tween-60 is 1%, a mass fraction of the polyvinylpyrrolidone is 2%, a mass fraction of the polyoxyethylene alkylamide is 2%, a mass fraction of the alkylamide is 2%, and the balance is distilled water.

The following is an embodiment of a mixed electroplating solution of the present invention.

The mixed electroplating solution of the present invention includes the compound dispersant, a silver-based aqueous solution and graphene, wherein the silver-based aqueous solution includes KCN and silver ions.

Further, a mass-volume concentration of KCN in the silver-based aqueous solution is 90.0-200.0g/L. Further, the mass-volume concentration of KCN in the silver-based aqueous solution is 90.0g/L, 100.0g/L, 110.0g/L, 120.0g/L, 130.0g/L, 140.0g/L, 150.0g/L, 160.0g/L, 170.0g/L, 180.0g/L, 190.0g/L or 200.0g/L.

Further, a mass-volume concentration of silver ions in the silver-based aqueous solution is 15.0-50.0g/L. Further, the mass-volume concentration of silver ions in the silver-based aqueous solution is 15.0g/L, 20.0g/L, 25.0g/L, 30.0g/L, 35.0g/L, 40.0g/L, 45.0g/L or 50.0g/L.

Further, the silver ions are provided by an aqueous solution prepared by electrolysis of a silver plate.

Further, a mass-volume concentration of graphene in the mixed electroplating solution is 1.0-20.0g/L Further, the mass-volume concentration of graphene in the mixed electroplating solution is 1.0g/L, 1.5g/L, 2.0g/L, 2.5g/L, 3.0g/L, 4.0g/L, 5.0g/L, 6.0g/L, 7.0g/L, 8.0g/L, 9.0g/L, 10.0g/L, 11.0g/L, 12.0g/L, 13.0g/L, 14.0g/L, 15.0g/L, 16.0g/L, 17.0g/L, 18.0g/L, 19.0g/L or 20.0g/L.

Further, a volume by volume concentration of the compound dispersant in the mixed electroplating solution is 15-45ml/L. Further, the volume by volume concentration of the compound dispersant in the mixed electroplating solution is 15ml/L, 20ml/L, 25ml/L, 30ml/L, 35ml/L, 40ml/L or 45ml/L.

Further, a barrel plating current density of the mixed electroplating solution is 0.5-0.7A/dm². Further, the rolling plating current density of the mixed electroplating solution is 0.5A/dm², 0.6A/dm² or 0.7A/dm².

Further, a rack plating current density of the mixed electroplating solution is 0.7-1.0A/dm². Further, the rack plating current density of the mixed electroplating solution is 0.7A/dm², 0.8A/dm², 0.9A/dm², or 1.0A/dm².

The following is an embodiment of a preparation method of the mixed electroplating solution of the present invention.

In Step 1, a silver-based aqueous solution is prepared, wherein in the silver-based aqueous solution, a mass-volume concentration of KCN is 90.0-200g/L, and a mass-volume concentration of silver ions is 15-50g/L.

In Step 2, the compound dispersant and graphene are sequentially added to the silver-based aqueous solution, and mixed under stirring to prepare the mixed electroplating solution, wherein in the mixed electroplating solution, a volume by volume concentration of the compound dispersant is 15-45ml/L, and a mass-volume concentration of the graphene is 1.0-20g/L.

### Example 9:

The mixed electroplating solution includes the compound dispersant of Example 1, the silver-based aqueous solution and the graphene, wherein the silver-based aqueous solution includes KCN and silver ions; in the mixed electroplating solution, a volume by volume concentration of the compound dispersant is 30.0ml/L, and a mass-volume concentration of the graphene is 2.0g/L; and in the silver-based aqueous solution, a mass-volume concentration of KCN is 150.0g/L, and a mass-volume concentration of the silver ions is 30.0g/L.

Further, a barrel plating current density of the mixed electroplating solution is 0.6A/dm².

Further, a rack plating current density of the mixed electroplating solution is 0.8A/dm².

### Example 10:

The mixed electroplating solution includes the compound dispersant of Example 2, the silver-based aqueous solution and the graphene, wherein the silver-based aqueous solution includes KCN and silver ions; in the mixed electroplating solution, a volume by volume concentration of the compound dispersant is 30.0ml/L, and a mass-volume concentration of the graphene is 2.0g/L; and in the silver-based aqueous solution, a mass-volume concentration of KCN is 150.0g/L, and a mass-volume concentration of the silver ions is 30.0g/L.

Further, a barrel plating current density of the mixed electroplating solution is 0.6A/dm².

Further, a rack plating current density of the mixed electroplating solution is 0.8A/dm².

### Example 11:

The mixed electroplating solution includes the compound dispersant of Example 3, the silver-based aqueous solution and the graphene, wherein the silver-based aqueous solution includes KCN and silver ions; in the mixed electroplating solution, a volume by volume concentration of the compound dispersant is 30.0ml/L, and a mass-volume concentration of the graphene is 2.0g/L; and in the silver-based aqueous solution, a mass-volume concentration of KCN is 150.0g/L, and a mass-volume concentration of the silver ions is 30.0g/L.

Further, a barrel plating current density of the mixed electroplating solution is 0.6A/dm².

Further, a rack plating current density of the mixed electroplating solution is 0.8A/dm².

### Example 12:

The mixed electroplating solution includes the compound dispersant of Example 4, the silver-based aqueous solution and the graphene, wherein the silver-based aqueous solution includes KCN and silver ions; in the mixed electroplating solution, a volume by volume concentration of the compound dispersant is 30.0ml/L, and a mass-volume concentration of the graphene is 3.0g/L; and in the silver-based aqueous solution, a mass-volume concentration of KCN is 150.0g/L, and a mass-volume concentration of the silver ions is 30.0g/L.

Further, a barrel plating current density of the mixed electroplating solution is 0.6A/dm².

Further, a rack plating current density of the mixed electroplating solution is 0.8A/dm².

### Example 13:

The mixed electroplating solution includes the compound dispersant of Example 5, the silver-based aqueous solution and the graphene, wherein the silver-based aqueous solution includes KCN and silver ions; in the mixed electroplating solution, a volume by volume concentration of the compound dispersant is 15.0ml/L, and a mass-volume concentration of the graphene is 1.0g/L; and in the silver-based aqueous solution, a mass-volume concentration of KCN is 90.0g/L, and a mass-volume concentration of the silver ions is 15.0g/L.

Further, a barrel plating current density of the mixed electroplating solution is 0.7A/dm².

Further, a rack plating current density of the mixed electroplating solution is 1.0A/dm².

### Example 14:

The mixed electroplating solution includes the compound dispersant of Example 6, the silver-based aqueous solution and the graphene, wherein the silver-based aqueous solution includes KCN and silver ions; in the mixed electroplating solution, a volume by volume concentration of the compound dispersant is 45.0ml/L, and a mass-volume concentration of the graphene is 20.0g/L; and in the silver-based aqueous solution, a mass-volume concentration of KCN is 200.0g/L, and a mass-volume concentration of the silver ions is 50.0g/L.

Further, a barrel plating current density of the mixed electroplating solution is 0.5A/dm².

Further, a rack plating current density of the mixed electroplating solution is 0.7A/dm².

### Example 15:

The mixed electroplating solution includes the compound dispersant of Example 7, the silver-based aqueous solution and the graphene, wherein the silver-based aqueous solution includes KCN and silver ions; in the mixed electroplating solution, a volume by volume concentration of the compound dispersant is 35.0ml/L, and a mass-volume concentration of the graphene is 10.0g/L; and in the silver-based aqueous solution, a mass-volume concentration of KCN is 180.0g/L, and a mass-volume concentration of the silver ions is 40.0g/L.

Further, a barrel plating current density of the mixed electroplating solution is 0.6A/dm².

Further, a rack plating current density of the mixed electroplating solution is 0.9A/dm².

### Example 16:

The mixed electroplating solution includes the compound dispersant of Example 8, the silver-based aqueous solution and the graphene, wherein the silver-based aqueous solution includes KCN and silver ions; in the mixed electroplating solution, a volume by volume concentration of the compound dispersant is 25.0ml/L, and a mass-volume concentration of the graphene is 5.0g/L; and in the silver-based aqueous solution, a mass-volume concentration of KCN is 130.0g/L, and a mass-volume concentration of the silver ions is 25.0g/L.

Further, a barrel plating current density of the mixed electroplating solution is 0.7A/dm².

Further, a rack plating current density of the mixed electroplating solution is 0.8A/dm².

### Example 17:

The compound dispersant is composed of dioctyl sulfosuccinate sodium salt, Tween-40, Tween-60, polyvinylpyrrolidone and distilled water; and in the compound dispersant, a mass fraction of the dioctyl sulfosuccinate sodium salt is 8%, a mass fraction of the Tween-40 is 3%, a mass fraction of Tween-60 is 4%, the mass fraction of the polyvinylpyrrolidone is 5%, and the balance is distilled water.

A preparation method of the compound dispersant includes the following operation steps:
Step 1, adding an anionic surfactant (dioctyl sodium sulfosuccinate) and nonionic surfactants (Tween-40 and Tween-60) sequentially to distilled water of 50°C, and stirring for 13min; and
Step 2, adding a wetting agent (polyvinylpyrrolidone) to the mixture obtained in Step 1, supplementing distilled water, and stirring for 10min to prepare the compound dispersant, wherein in the compound dispersant, a mass fraction of the dioctyl sulfosuccinate sodium salt is 8%, a mass fraction of the Tween-40 is 3%, a mass fraction of the Tween-60 is 4%, a mass fraction of the polyvinylpyrrolidone is 5%, and the balance is distilled water.

### Example 18:

The compound dispersant is composed of dioctyl sulfosuccinate sodium salt, dihexyl sodium sulfosuccinate, Tween-20, polyvinylpyrrolidone, diglycolamide laurate and distilled water; and in the compound dispersant, a mass fraction of the dioctyl sulfosuccinate sodium salt is 2%, a mass fraction of the dihexyl sodium sulfosuccinate is 1%, a mass fraction of the Tween-20 is 3%, a mass fraction of the polyvinylpyrrolidone is 1%, a mass fraction of the diglycolamide laurate is 1%, and the balance is distilled water.

A preparation method of the compound dispersant includes the following operation steps:
Step 1, adding anionic surfactants (dioctyl sodium sulfosuccinate and dihexyl sodium sulfosuccinate) and a nonionic surfactant (Tween-20) sequentially to distilled water of 60°C, and stirring for 15min; and
Step 2, adding wetting agents (polyvinylpyrrolidone and diglycolamide laurate) to the mixture obtained in Step 1, supplementing distilled water, and stirring for 12min to prepare the compound dispersant, wherein in the compound dispersant, a mass fraction of the dioctyl sulfosuccinate sodium salt is 2%, a mass fraction of the dihexyl sodium sulfosuccinate is 1%, a mass fraction of the Tween-20 is 3%, a mass fraction of the polyvinylpyrrolidone is 1%, a mass fraction of the diglycolamide laurate is 1%, and the balance is distilled water.

### Example 19:

The compound dispersant is composed of dioctyl sulfosuccinate sodium salt, lauryl sulfosuccinate monoester sodium two, sodium dodecyl dimethyl ether disulfonate and dioctyl sulfosuccinate sodium salt, Tween-20, Tween-60, Tween-80, polyvinylpyrrolidone, diglycolamide laurate, sodium pyrrolidone carboxylate, and distilled water; and in the compound dispersant, a mass fraction of the dioctyl sulfosuccinate sodium salt is 2%, a mass fraction of lauryl sulfosuccinate monoester sodium two is 2%, a mass fraction of the sodium dodecyl dimethyl ether disulfonate is 3%, a mass fraction of the dioctyl sulfosuccinate sodium salt is 2%, a mass fraction of the Tween-20 is 2%, a mass fraction of the Tween-60 is 5%, a mass fraction of the Tween-80 is 2%, a mass fraction of the polyvinylpyrrolidone is 2%, a mass fraction of the diglycolamide laurate is 3%, a mass fraction of the sodium pyrrolidone carboxylate is 2%, and the balance is distilled water.

A preparation method of the compound dispersant includes the following operation steps:
Step 1, adding anionic surfactants (dioctyl sodium sulfosuccinate, lauryl sulfosuccinate monoester sodium two, sodium dodecyl dimethyl ether disulfonate and dioctyl sulfosuccinate sodium salt) and nonionic surfactants (Tween-20, Tween -60 and Tween -80) sequentially to distilled water of 55°C, and stirring for 15min; and
Step 2, adding wetting agents (polyvinylpyrrolidone, diglycolamide laurate, and sodium pyrrolidone carboxylate) to the mixture obtained in Step 1, supplementing distilled water, and stirring for 15min to prepare the compound dispersant, wherein in the compound dispersant, a mass fraction of the dioctyl sulfosuccinate sodium salt is 2%, a mass fraction of the lauryl sulfosuccinate monoester sodium two is 2%, a mass fraction of the sodium dodecyl dimethyl ether disulfonate is 3%, a mass fraction of the dioctyl sulfosuccinate sodium salt is 2%, a mass fraction of the Tween-20 is 2%, a mass fraction of the Tween-60 is 5%, a mass fraction of the Tween-80 is 2%, a mass fraction of the polyvinylpyrrolidone is 2%, a mass fraction of the diglycolamide laurate is 3%, a mass fraction of the sodium pyrrolidone carboxylate is 2%, and the balance is distilled water.

### Example 20:

The compound dispersant is composed of dioctyl sulfosuccinate sodium salt, Tween-40, Tween-60, alkylolamide(s), and distilled water; and in the compound dispersant, a mass fraction of the dioctyl sulfosuccinate sodium salt is 5%, a mass fraction of the Tween-40 is 2%, a mass fraction of the Tween-60 is 3%, a mass fraction of the alkylolamide(s) is 5%, and the balance is distilled water.

A preparation method of the compound dispersant includes the following operation steps:
Step 1, adding an anionic surfactant (dioctyl sodium sulfosuccinate) and nonionic surfactants (Tween-40 and Tween-60) sequentially to distilled water of 50°C, and stirring for 12min; and
Step 2, adding a wetting agent (alkylolamide(s)) to the mixture obtained in Step 1, supplementing distilled water, and stirring for 12min to prepare the compound dispersant; and in the compound dispersant, a mass fraction of the dioctyl sulfosuccinate sodium salt is 5%, a mass fraction of the Tween-40 is 2%, a mass fraction of the Tween-60 is 3%, a mass fraction of the alkylolamide(s) is 2%, and the balance is distilled water.

### Example 21:

The compound dispersant is composed of dioctyl sulfosuccinate sodium salt and dioctyl sulfosuccinate sodium salt, Tween-20 and Tween-40, polyoxyethylene alkylamide and diglycolamide laurate, and distilled water; and in the compound dispersant, a mass fraction of the dioctyl sulfosuccinate sodium salt is 5%, a mass fraction of the dioctyl sulfosuccinate sodium salt is 5%, a mass fraction of the Tween-20 is 5%, a mass fraction of the Tween-40 is 5%, a mass fraction of the polyoxyethylene alkylamide is 6%, a mass fraction of the diglycolamide laurate is 4%, and the balance is distilled water.

A preparation method of the compound dispersant includes the following operation steps:
Step 1, adding an anionic surfactant (dioctyl sodium sulfosuccinate) and nonionic surfactants (Tween-40 and Tween-60) sequentially to distilled water of 60°C, and stirring for 12min; and
Step 2, adding a wetting agent (alkylolamide) to the mixture obtained in Step 1, supplementing distilled water, and stirring for 12min to prepare the compound dispersant, wherein in the compound dispersant, a mass fraction of the dioctyl sulfosuccinate sodium salt is 5%, a mass fraction of the Tween-40 is 2%, a mass fraction of the Tween-60 is 3%, a mass fraction of the alkylolamide(s) is 2%, and the balance is distilled water.

### Example 22:

The mixed electroplating solution includes the compound dispersant of Example 17, the silver-based aqueous solution and the graphene, wherein the silver-based aqueous solution includes KCN and silver ions; in the mixed electroplating solution, a volume by volume concentration of the compound dispersant is 30.0ml/L, and a mass-volume concentration of the graphene is 6.0g/L; and in the silver-based aqueous solution, a mass-volume concentration of KCN is 140.0g/L, and a mass-volume concentration of the silver ions is 35.0g/L.

Further, a barrel plating current density of the mixed electroplating solution is 0.7A/dm².

Further, a rack plating current density of the mixed electroplating solution is 0.8A/dm².

### Example 23:

The mixed electroplating solution includes the compound dispersant of Example 18, the silver-based aqueous solution and the graphene, wherein the silver-based aqueous solution includes KCN and silver ions; in the mixed electroplating solution, a volume by volume concentration of the compound dispersant is 40.0ml/L, and a mass-volume concentration of the graphene is 4.0g/L; and in the silver-based aqueous solution, a mass-volume concentration of KCN is 100.0g/L, and a mass-volume concentration of the silver ions is 20.0g/L.

Further, a barrel plating current density of the mixed electroplating solution is 0.7A/dm².

Further, a rack plating current density of the mixed electroplating solution is 1.0A/dm².

### Example 24:

The mixed electroplating solution includes the compound dispersant of Example 19, the silver-based aqueous solution and the graphene, wherein the silver-based aqueous solution includes KCN and silver ions; in the mixed electroplating solution, a volume by volume concentration of the compound dispersant is 25.0ml/L, and a mass-volume concentration of the graphene is 9.0g/L; and in the silver-based aqueous solution, a mass-volume concentration of KCN is 160.0g/L, and a mass-volume concentration of the silver ions is 45.0g/L.

Further, a barrel plating current density of the mixed electroplating solution is 0.6A/dm².

Further, a rack plating current density of the mixed electroplating solution is 0.7A/dm².

### Example 25:

The mixed electroplating solution includes the compound dispersant of Example 20, the silver-based aqueous solution and the graphene, wherein the silver-based aqueous solution includes KCN and silver ions; in the mixed electroplating solution, a volume by volume concentration of the compound dispersant is 33.0ml/L, and a mass-volume concentration of the graphene is 7.0g/L; and in the silver-based aqueous solution, a mass-volume concentration of KCN is 140.0g/L, and a mass-volume concentration of the silver ions is 40.0g/L.

Further, a barrel plating current density of the mixed electroplating solution is 0.6A/dm².

Further, a rack plating current density of the mixed electroplating solution is 0.8A/dm².

### Example 26:

The mixed electroplating solution includes the compound dispersant of Example 19, the silver-based aqueous solution and the graphene, wherein the silver-based aqueous solution includes KCN and silver ions; in the mixed electroplating solution, a volume by volume concentration of the compound dispersant is 17.0ml/L, and a mass-volume concentration of the graphene is 10.0g/L; and in the silver-based aqueous solution, a mass-volume concentration of KCN is 190.0g/L, and a mass-volume concentration of the silver ions is 47.0g/L.

Further, a barrel plating current density of the mixed electroplating solution is 0.5A/dm².

Further, a rack plating current density of the mixed electroplating solution is 0.7A/dm².

### Blank electroplating solution:

The blank electroplating solution includes a silver-based aqueous solution and graphene, wherein the silver-based aqueous solution includes KCN and silver ions; in the mixed electroplating solution, a mass-volume concentration of the graphene is 2.0g/L; and in the silver-based aqueous solution, a mass-volume concentration of KCN is 150.0g/L, and a mass-volume concentration of silver ions is 30.0g/L.

Further, a barrel plating current density of the blank electroplating solution is 0.6A/dm².

Further, a rack plating current density of the blank electroplating solution is 0.8A/dm².

The mixed electroplating solution of the present invention is a graphene-silver mixed electroplating solution, which is used for electroplating a product to be electroplated by the following operations to form a graphene-silver mixed electroplating layer, to be specific: cleaning the product to be electroplated, putting the cleaned product to be electroplated into a potassium cyanide solution for cyanide activation, pre-plating sliver to the activated product to be electroplated, putting the pre-silver-plated product to be electroplated into the mixed electroplating solution for electroplating, and washing the electroplated product for multiple times after the electroplating is completed.

Table 1: the followings are physical parameters of the mixed electroplating solution and the blank electroplating solution (without adding the compound dispersant of the present invention) of the respective embodiments and experimental data of products electroplated by the two solutions (the larger an absolute value of zeta potential value, the better the dispersion of graphene particles in the mixed electroplating solution; the smaller a diameter value under particle size detection, the better the dispersion of graphene in the mixed electroplating solution; and the larger the wear resistance value, the better the wear resistance of the electroplated product):

**Table 1:**

| Serial No. | Zeta potential, /mV | Diameter under particle size detection, /d.nm | Abrasion resistance |
|---|---|---|---|
| Blank electroplating solution | -34.9 | 704.9 | 32.3 |
| Example 9 | -43.8 | 599.4 | 499.8 |
| Example 10 | -45.6 | 584.3 | 513.6 |
| Example 11 | -49.3 | 524.9 | 659.1 |
| Example 12 | -44.2 | 600.8 | 501.3 |
| Example 13 | -42.5 | 610.3 | 423.6 |
| Example 14 | -48.9 | 554.9 | 643.2 |
| Example 15 | -47.5 | 569.4 | 589.7 |
| Example 16 | -49.8 | 609.7 | 623.01 |
| Example 22 | -48.8 | 602.5 | 600.9 |
| Example 23 | -43.0 | 597.7 | 561.8 |
| Example 24 | -44.8 | 586.3 | 579.6 |
| Example 25 | -46.3 | 610.1 | 555.6 |
| Example 26 | -47.0 | 594.6 | 613.8 |

| | | | |
|---|---|---|---|
| Note: the wear resistance refers to an average number of bearable times per micron, with a unit /time. | | | |

Through the above experimental data, it is shown that the mixed electroplating solution of the present invention ensures the stable and uniform distribution of graphene in the mixed electroplating solution, which can significantly improve the uniformity of graphene distribution in the silver-graphene electroplating layer, thereby significantly improving the product performance (including electrical conductivity, thermal conductivity, wear resistance, etc.) of the electroplated products.

The above content is a further detailed description of the present invention in conjunction with specific preferred embodiments, but it cannot be regarded that the specific embodiments of the present invention are limited to these descriptions. For a person of ordinary skill in the art to which the present invention belongs, without departing from the idea of the present invention, a number of simple deductions or replacements may be made, which should be regarded as falling within the protection scope of the present invention.

## Claims

1. A compound dispersant, being composed of distilled water, a nonionic surfactant, an anionic surfactant and a wetting agent, wherein the nonionic surfactant is a Tween compound, the anionic surfactant is a hydrocarbyl sulfonate salt compound, and the wetting agent is an amide compound.

2. The compound dispersant as claimed in claim 1, wherein the wetting agent comprises one or more of polyvinylpyrrolidone, alkylamide, diglycolamide laurate, sodium pyrrolidone carboxylate, polyoxyethylene alkylamide and alkylolamide(s).

3. The compound dispersant as claimed in claim 1, wherein the nonionic surfactant comprises one or more of Tween-20, Tween-40, Tween-60 and Tween-80.

4. The compound dispersant as claimed in claim 1, wherein the anionic surfactant comprises one or more of dihexyl sodium sulfosuccinate, sodium lauryl succinate monoester sulfonate, disodium 4-dodecyl-2,4'-oxydibenzenesulfonate, lauryl sulfosuccinate monoester sodium two, disodium laureth (3) sulfosuccinate, dioctyl sulfosuccinate sodium salt and dioctyl sulfosuccinate sodium salt.

5. The compound dispersant as claimed in claim 1, wherein a mass fraction of the nonionic surfactant in the compound dispersant is 1-10%;
a mass fraction of the wetting agent in the compound dispersant is 1-10%; and
a mass fraction of the anionic surfactant in the compound dispersant is 1-10%.

6. A preparation method for a compound dispersant, comprising the following steps:
Step 1, adding an anionic surfactant and a non-ionic surfactant to distilled water at a temperature of T0, and stirring for t0, 40°C≤ T0≤60°C, 5≤t0≤15min; and
Step 2, adding a wetting agent to a mixture obtained in Step 1, supplementing with the distilled water and stirring for t1 to obtain the compound dispersant, 5min≤t1≤15min, wherein in the compound dispersant, a mass fraction of the nonionic surfactant is 1-10%, a mass fraction of the anionic surfactant is 1-10%, a mass fraction of the wetting agent is 1-10%, and the balance is distilled water.

7. The preparation method of the compound dispersant as claimed in claim 6, wherein the wetting agent comprises one or more of polyvinylpyrrolidone, alkylamide, diglycolamide laurate, sodium pyrrolidone carboxylate, polyoxyethylene alkylamide and alkylolamide(s).

8. The preparation method of the compound dispersant as claimed in claim 6, wherein the nonionic surfactant comprises one or more of Tween-20, Tween-40, Tween-60 and Tween-80.

9. The preparation method of the compound dispersant as claimed in claim 6, wherein the anionic surfactant comprises one or more of dihexyl sodium sulfosuccinate, sodium lauryl succinate monoester sulfonate, disodium 4-dodecyl-2,4'-oxydibenzenesulfonate, lauryl sulfosuccinate monoester sodium two, disodium laureth (3) sulfosuccinate, dioctyl sulfosuccinate sodium salt and dioctyl sulfosuccinate sodium salt.

10. A mixed electroplating solution, comprising the compound dispersant as claimed in any one of claims 1 to 5, a silver-based aqueous solution and graphene, the silver-based aqueous solution comprises KCN and silver ions.

11. The mixed electroplating solution as claimed in claim 10, wherein,
a volume by volume concentration of the compound dispersant in the mixed electroplating solution is 15.0-45.0ml/L;
a mass-volume concentration of KCN in the silver-based aqueous solution is 90.0-200.0g/L;
a mass-volume concentration of silver ions in the silver-based aqueous solution is 15.0-50.0g/L; and
a mass-volume concentration of graphene in the mixed electroplating solution is 1.0-20.0g/L.

12. The mixed electroplating solution as claimed in claim 10, wherein a barrel plating current density of the mixed electroplating solution is 0.5-0.7A/dm³; and
a rack plating current density of the mixed electroplating solution is 0.7-1.0A/dm³.

13. A preparation method of a mixed electroplating solution, comprising the following steps:
Step 1, preparing a silver-based aqueous solution, wherein in the silver-based aqueous solution, a mass-volume concentration of KCN is 90.0-200.0g/L, and a mass-volume concentration of silver ions is 15.0-50.0g/L; and
Step 2, adding the compound dispersant as claimed in any one of claims 1 to 5 and graphene sequentially to the silver-based aqueous solution, and mixing under stirring to prepare the mixed electroplating solution, wherein in the mixed electroplating solution, a volume by volume concentration of the compound dispersant is 15.0-45.0ml/L, and a mass-volume concentration of the graphene is 1.0-20.0g/L.
